# EUROPEAN PATENT APPLICATION

(11) **EP 2 667 338 A1**
(43) Date of publication of application: **27.11.2013**
(21) Application number: 12169341.0
(22) Date of filing: 24.05.2012
(51) Int. Cl.: G06Q 10/10

(54) **Methods and apparatus for use in adding contacts between profiles of different social networks**

(71) Applicant: BlackBerry Limited, Waterloo, ON N2K 0A7 (CA)
(72) Inventor: Pepper, Jamieson Robin, Waterloo, Ontario N2L 3W8 (CA)
(74) Representative: Greenaway, Martin William

(57) **Abstract**

Techniques for use in adding contacts between profiles of different social networks are described. For each candidate contact in a first profile, the technique involves identifying, for a selected attribute type, whether a match exists between a stored attribute of the candidate contact and a stored attribute of a contact in a second profile. If the match exists, then the candidate contact is recommended, queued, or added as a contact in the second profile. Otherwise, if no match exists, then the candidate contact is excluded from being recommended, queued, or added as a contact in the second profile. A learning mechanism may set the operating mode to a recommending mode, a queuing mode, or an adding mode for adding contacts. The operating mode may be set based on predetermined conditions or events, such as when a number of contacts in the first and the second profiles having a common stored attribute exceeds a threshold value.

## Description

### BACKGROUND

### Field of the Technology

The present disclosure relates generally to social networking methods and apparatus for computer devices, and more particularly to methods and apparatus for use in adding contacts between profiles of different social networks.

### Description of the Related Art

Computer systems may store vast amounts of data, and as a consequence it has become increasingly important to provide users with effective ways to locate information that is relevant to their interests. One area in which large amounts of information are involved is social networking.

Social networking systems allow users to designate other users as contacts or "friends" (or otherwise connect to or form relationships with other users), contribute and interact with media items, use applications, join groups, list and confirm attendance at events, create pages, and perform other tasks that facilitate social interaction. A social networking system is a good example of the demand for systems that help users locate relevant information from within a large set of information tracked or otherwise used by the system. However, locating information of particular relevance to a given user of a mobile communication device at any given time is more challenging.

A social networking system typically tracks a considerable amount of information about each user, including their contacts, which can be leveraged to identify items of relevance to a given user of a mobile communication device. However, the functionalities currently available in social networking systems do not fully leverage the information between different social networks.

Other networks and environments may experience the same or similar issues. What are needed are methods and apparatus to overcome these and other related deficiencies of the prior art.

### BRIEF DESCRIPTION OF THE DRAWINGS

Embodiments of the present disclosure will now be described by way of example with reference to attached figures, wherein:

FIG. 1 is an illustration of an example communication system within which a computer device may interface with a plurality of social network servers via a communication network;

FIG. 2 is a schematic diagram of an example computer device;

FIG. 3 is an illustration of an example of a plurality of contact lists from different social networks, which may be incorporated into an aggregate contact list;

FIG. 4 is a flowchart for describing an example method for use in adding contacts between profiles of different social networks; and

FIG. 5 is an operating mode diagram of the computer device to illustrate different modes of operation which may be utilized for adding the contacts between profiles of different social networks.

### DETAILED DESCRIPTION

Methods and apparatus for use in adding contacts between profiles of different social networks are described herein. In one illustrative example, a technique for use in adding contacts in a first profile of a first social network to a second profile of a second social network is described. For each candidate contact in the first profile, the technique involves identifying, for a selected attribute type, whether a match exists between a stored attribute of the candidate contact in the first profile and a stored attribute of a contact in the second profile. If the match exists, then the candidate contact in the first profile is recommended, queued, or added as a contact in the second profile. Otherwise, if no match exists, then the candidate contact in the first profile is excluded from being recommended, queued, or added as a contact in the second profile.

The attribute types may be or include any suitable attribute types. The attribute types may include a relationship type between the candidate contact in the first profile and the user, where the relationship type may be one of family, friends, coworker, classmate, etc. In addition, the attribute types may include an activity or interest type. Further, the attribute types may include a group name of a group associated with the first profile. As other examples, the attribute types may include a last name, a domain name of an electronic mail (e-mail) address, a city of a residential address, a city of a home town, a school name, or an employer name.

In some embodiments, a learning mechanism may be utilized to set an operating mode of the technique to a recommending mode, a queuing mode, or an adding mode for adding contacts. The operating mode may be set based on predetermined conditions or events, such as when the number of contacts in the first and the second profiles having a common stored attribute exceeds a threshold value. In one illustrative example, the operating mode is initially set to a recommending mode of operation. The operating mode may be set to the recommending mode as long as the number of contacts in the first and the second profiles having a common stored attribute is less than a first threshold value. Here, if a match exists, the candidate contact in the first profile is recommended as a contact for addition to the second profile. If a number of contacts in the first and the second profiles having the common stored attribute exceeds the first threshold value, then the operating mode is set to a queuing mode of operation. Here, if a match exists, the candidate contact in the first profile is automatically queued as a contact for addition to the second profile. On the other hand, if the number of contacts in the first and the second profiles having the common stored attribute exceeds a second threshold value, then the operating mode is set to an automatic adding mode of operation. Here, if a match exists, the candidate contact in the first profile is automatically added as a contact in the second profile.

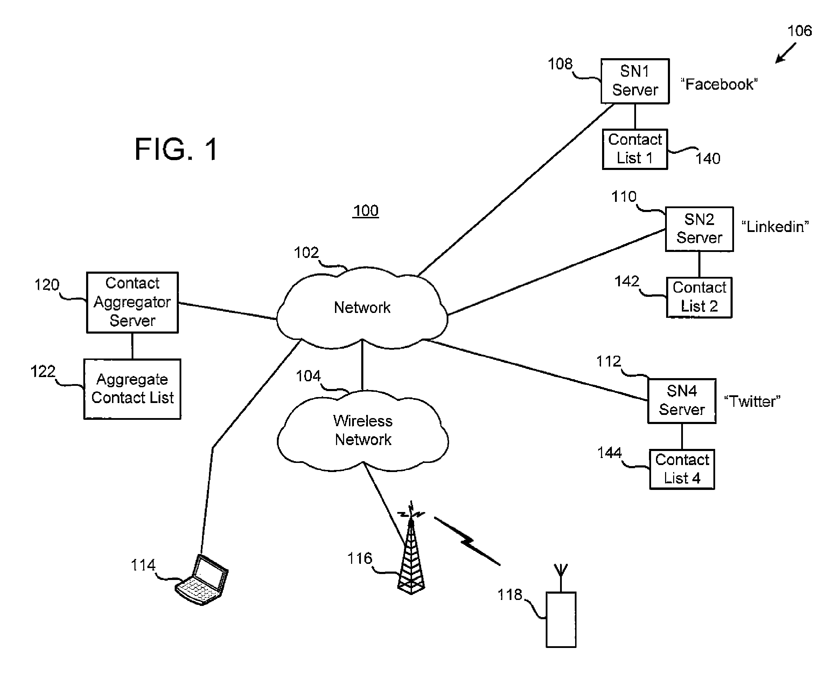

FIG. 1 is an illustration of an example communication system 100 within which a computer device (such as a computer device 114 or 118) may communicate. In FIG. 1, computer device 114 is illustrated as a computer, such as a laptop, a tablet, or a desktop computer, whereas computer device 118 is illustrated as a mobile communication device, such as a mobile phone or smartphone. Computer device 118 may communicate via a wireless communication network 104 through a base station or access point 116. For simplicity, computer device 118 will be referred to in the discussion as the device of interest.

Computer device 118 may interface or interact with a plurality of social networks via a communication network 102. To provide social networking, a plurality of servers 106 (or social network "SN" servers) which include servers 108, 110, and 112 are communicatively connected to communication network 102 (e.g., the Internet). Server 108 is configured to facilitate a first social network (SN 1) for a plurality of users or devices, server 110 is configured to facilitate a second social network (SN 2) for a plurality of users or devices, and server 112 is configured to facilitate an Nth social network (SN N) for a plurality of users or devices. Each server 106 has a social networking application which is utilized by computer device 118 for social networking functions. More particularly in the example of FIG. 1, server 108 is indicated as employing a FACEBOOK^{®} application, server 110 is indicated as employing a LINKEDIN^{®} application, and server 112 is indicated as employing a TWITTER^{®} application, as a few examples.

Each social network application stores and maintains its own unique contact list. For example, server 108 stores and maintains a contact list 140, server 110 stores and maintains a contact list 142, and server 112 stores and maintains a contact list 144. These contact lists 140, 142, and 144 are associated with the same single user of computer device 118. For example, the user profiles associated with the contact lists 140, 142, and 144 may have or share the same user account name, and/or be accessible by the same single user of computer device 118.

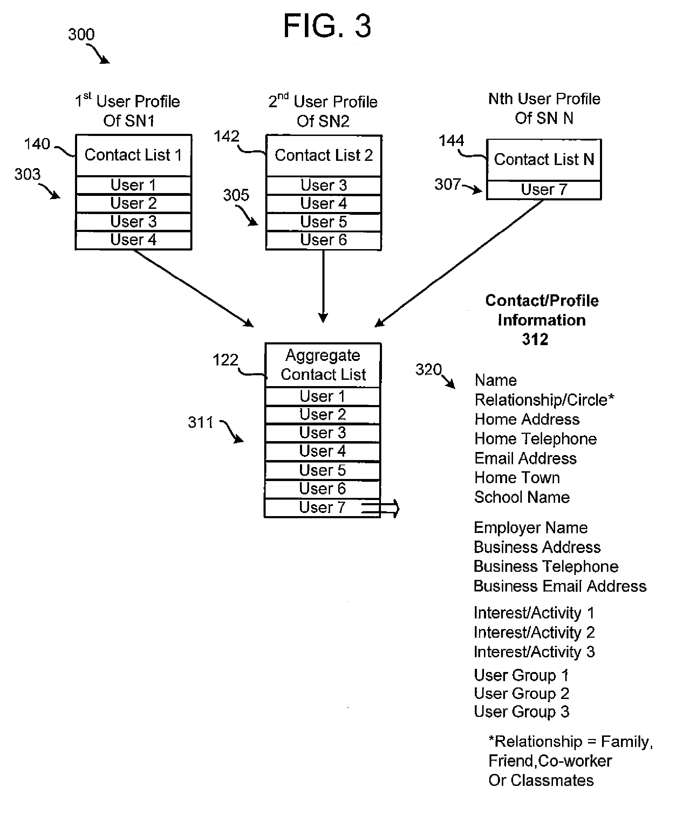

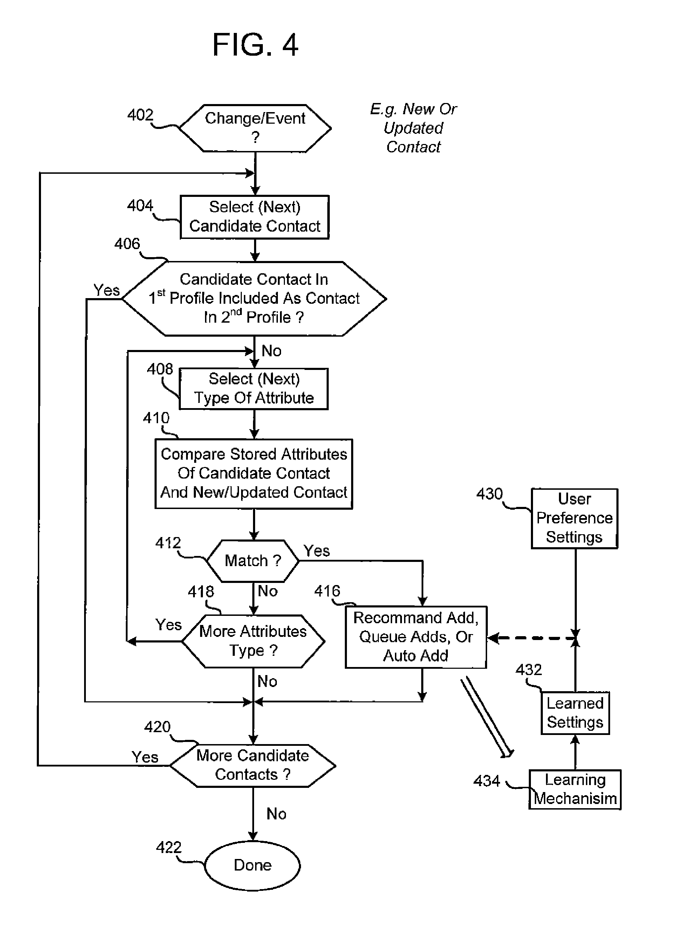

A contact aggregator server 120 which is connected to communication network 102 may also be utilized in the techniques of the present disclosure. Contact aggregator server 120 is configured to facilitate the aggregation of contact information from the multiple social networks into a single "unified" or aggregate contact list 122. Aggregate contact list 122 may be used by computer device 118 for adding contacts between profiles of the different social networks as described in relation to FIGS. 3-5 below. Contact lists 140, 142, and 144, and aggregate contact list 122, are described in more detail in relation to FIG. 4.

Note that computer device 118 itself may employ all or part of a social networking application for social networking functions, and/or the storage of one or more contact lists and contacts, for the adding of contacts between profiles per the techniques of the present disclosure.

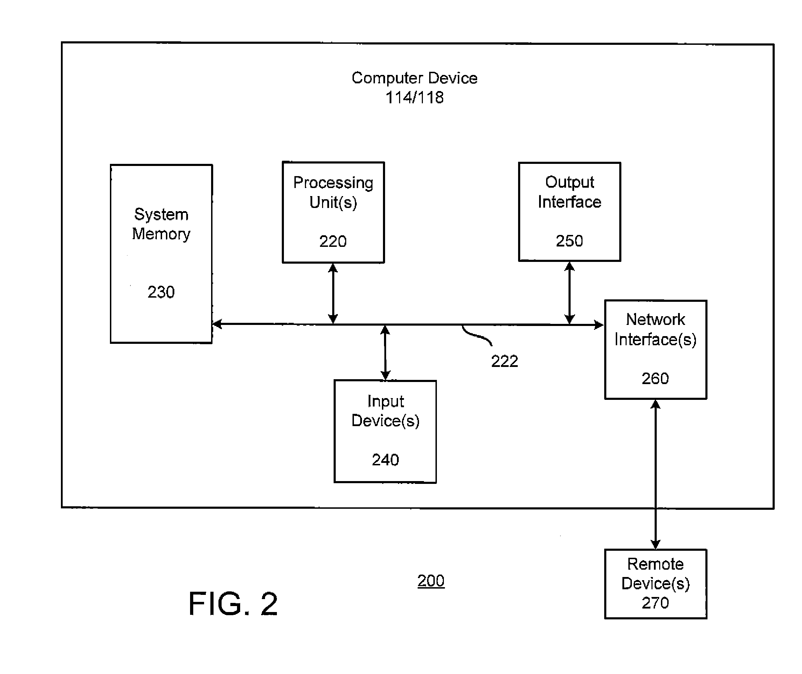

FIG. 2 is a schematic diagram 200 of computer device 114/118 of FIG. 1. It will be readily understood that certain embodiments can be implemented using any of a wide variety of devices or combinations of devices. An example device that may be used in implementing one or more embodiments includes a computing device in the form of computer device 114/118.

Components of computer device 114/118 may include, but are not limited to, a processing unit 220, a system memory 230, and a system bus 222 that couples various system components including the system memory 230 to the processing unit 220. Computer device 118 may include or have access to a variety of computer readable media. The system memory 230 may include computer readable storage media in the form of volatile and/or nonvolatile memory such as read only memory (ROM) and/or random access memory (RAM). By way of example, and not limitation, system memory 230 may also include an operating system, application programs, other program modules, and program data.

A user may interface with (for example, enter commands and information) computer device 114/118 through input devices 240. A monitor or other type of device can also be connected to the system bus 222 via an interface, such as an output interface 250. Output interface 250 may be or include a visual display or monitor. In addition to a display or monitor, computer device 114/118 may also include other peripheral output devices. In some embodiments, input device 240 and output device 250 may include a shared component, such as in the case where computer device 114/118 includes a touch screen display to receive input and provide output. Input device(s) 240 and output device(s) 250 may be referred to generally as a user interface. Computer device 114/118 may communicate using one or more interfaces 260 (e.g. one or more network interfaces, such as one or more wireless transceivers) to establish connections to one or more other remote computers or databases (e.g., remote device 270). The logical connections may include a network, such local area network (LAN) or a wide area network (WAN), but may also include other networks/buses.

It should be noted as well that certain embodiments may be implemented as a system, method or computer program product. Accordingly, aspects may take the form of an entirely hardware embodiment, an entirely software embodiment (including firmware, resident software, micro-code, et cetera) or an embodiment combining software and hardware aspects that may all generally be referred to herein as a "circuit," "module" or "system." Furthermore, aspects may take the form of a computer program product embodied in one or more computer readable medium(s) having computer readable program code embodied therewith.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for various aspects may be written in any combination of one or more programming languages, including an object oriented programming language such as Java™, Smalltalk, C++ or the like and conventional procedural programming languages, such as the "C" programming language or similar programming languages. The program code may execute entirely on a single computer (device), partly on a single computer, as a stand-alone software package, partly on single computer and partly on a remote computer or entirely on a remote computer or server. In the latter scenario, the remote computer may be connected to another computer through any type of network, including a local area network (LAN) or a wide area network (WAN), or the connection may be made for example through the Internet using an Internet Service Provider (ISP).

Aspects are described herein with reference to flowchart illustrations and/or block diagrams of methods, apparatuses (systems) and computer program products according to example embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

FIG. 3 is an illustration of an example of a plurality of contact lists 300 from user profiles of different social networks. These user profiles and associated contact lists 300 are associated with the same single user of computer device 118 of FIGs. 1-2. For example, the user profiles may have or share the same user account name, and/or be accessible by the same single user of computer device 118.

As shown in FIG. 3, a first user profile in the first social network (SN 1) includes contact list 140 having a plurality of users or contacts 303, a second user profile in the second social network (SN 2) includes contact list 142 having a plurality of users or contacts 305, and an Nth user profile in the Nth social network (SN N) includes contact list 144 having a plurality of users or contacts 307.

Each user or contact is associated with profile or contact information 312. Profile or contact information includes at least a plurality of stored attributes 320. Stored attributes 320 are information which may be used to describe, characterize, locate, and/or access the user of the profile. Each stored attribute is associated with an attribute type, which may be designated in an input field of the profile(s) (as entered by the user) or output data field in the profile(s) (as displayed from the profile).

Many examples are provided in FIG. 3. For example, the attribute types may include a relationship type between the contact and the user, where the relationship may be one of family, friends, coworker, classmate, etc. The attribute types may include an activity or interest type (e.g., with possible attributes = "CHESS", "VOLLEYBALL", "READING", "POLITICS", etc.). Further, the attribute types may include a group name of a group associated with a profile (e.g., with possible attributes = "VOLLEYBALL GROUP", "WATERLOO BOOK CLUB", "CHICAGO CUBS FAN GROUP"). As other examples, the attribute types may include a first name, a last name, an electronic mail (e-mail) address, a residential address, a home town, a school name, or an employer name.

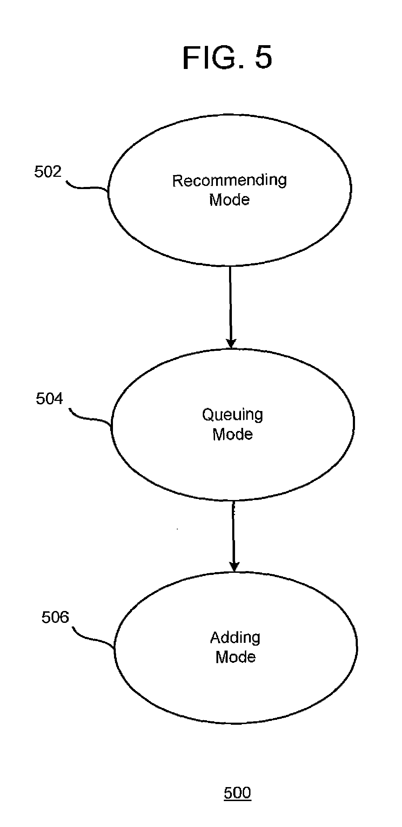

Contact aggregator server 120 and/or computer device 118 (FIG. 1) may be configured to aggregate contacts from contact lists 140, 142, and/or 144, as well as the stored attributes associated with these contacts, into a single aggregate contact list 122 (FIG. 3). Thus, aggregate contact list 122 may have a plurality of aggregate users or contacts 311. Aggregate contact list 122 may be regularly updated and maintained. For example, when contacts are added or updated in any one of the profiles, aggregate contact list 122 may be updated. The contact information in aggregate contact list 122 may therefore be used and accessed using the technique for adding contacts between profiles of the different social networks, as described in relation to FIGs. 4 and 5. Aggregate contact list 122 may or may not be viewable or accessible to the user of computer device 118.

FIG. 4 is a flowchart of an example method in a computer device for use in adding contacts between profiles of different social networks. The computer device may be associated with a first profile of a first social network and a second profile of a second social network, as described above in relation to FIGs 1-3. The method of FIG. 4 may be performed by computer device 118 described in relation to FIGs. 1-3 above. The techniques described in relation to the flowchart of FIG. 4 may be performed by one or more controllers or processors of the computer device, and with its wireless or RF transceiver(s) if computer device is a mobile communication device. A computer program product which may embody the technique may include a computer readable medium (e.g., memory of the computer device, computer disk, CD-ROM, etc.) having computer instructions stored therein which are executable by the one or more processors of the computer device for performing the technique.

In FIG. 4, the computer device detects a predetermined event or change in data (step 402 of FIG. 4). The predetermined event may be any suitable event, such as the expiration of a running timer, or receipt of a user input signal, for example. The change in data may be or include an addition of a new contact in a social network, an update to the data of an existing contact in a social network, or a joining of a new social network, as examples.

In response to the event or change in data in step 402, the computer device selects for consideration a candidate contact associated with the first profile of the first social network (step 404 of FIG. 4). The computer device determines if the candidate contact is already included as a contact in the second profile of the second social network (step 406 of FIG. 4). Alternatively, the second profile may be the aggregate contact list 122. If the contact is not included as a contact in the second profile as identified in step 406, then the computer device selects an attribute type for consideration (step 408 of FIG. 4).

For the selected attribute type, the computer device determines whether a match exists between a stored attribute of the candidate contact of the first profile and a stored attribute of a contact of the second profile. The computer device may do this by comparing, for the same attribute type, the stored attribute of the first profile and the stored attribute of the contact of the second profile (step 410 of FIG. 4). If a match exists (step 412 of FIG. 4), then the computer device recommends, queues, or adds the candidate contact in the second profile of the second social network (step 416 of FIG. 4). If no match exists at step 412, the computer device excludes the candidate contact from being recommended, queued, or added in step 416.

The computer device identifies whether there are more attribute types to consider (step 418 of FIG. 4). If there are no more attribute types to consider as identified in step 418, or if the candidate contact is already included as a contact in the second profile as identified in step 406, then the computer device determines if there are more candidate contacts left to consider (step 420 of FIG. 4). If there are more candidate contacts left as identified in step 420, then the steps repeat starting again at step 404. If there are no more candidates left as identified in step 406, then the flowchart ends, at a done block 422.

The attribute types selected in step 408 may include any suitable attribute types. The attribute types may include a relationship type between the contact and the user, where the relationship may be one of family, friends, coworker, classmate, etc. The attribute types may include an activity or interest type (e.g., with possible attributes = "CHESS", "VOLLEYBALL", "READING", "POLITICS", etc.). Further, the attribute types may include a group name of a group associated with a profile (e.g., with possible attributes = "VOLLEYBALL GROUP", "WATERLOO BOOK CLUB", "CHICAGO CUBS FAN GROUP"). Also, the attribute types may include a last name, a domain name of an electronic mail (e-mail) address, a city of a residential address, a city of a home town, a school name, or an employer name. In some embodiments, the technique makes use of some or all of these attribute types.

In step 416 of FIG. 4, the computer device will recommend, queue, or add the candidate contact based on user preference settings 430 and/or learned settings 432. User preference settings 430 may be set by the user via the user interface (e.g., input device 240 of FIG. 2) of the computer device and stored. User preference settings 430 indicate whether contacts should always be recommended, always be queued, or always be automatically added (i.e. in step 416 of FIG. 6).

User preference settings 430 may alternatively indicate whether "smart" adding with use of a learning mechanism 434 should be employed. Learned settings 432 are set by learning mechanism 434. Learning mechanism 432 may control operation (i.e. in step 416 of FIG. 4) in accordance with operating mode diagram 500 of FIG. 5 as described below.

FIG. 5 is an operating mode diagram 500 of the computer device for illustrating different modes of operation which may be utilized for adding contacts between profiles of different social networks. The mode of operation may be set in accordance with user preference settings 430 (see FIG. 4) and/or learned settings 432 which are set by learning mechanism 434 (see FIG. 4).

As illustrated in FIG. 5, the computer device may operate in a recommending mode 502, a queuing mode 504, or an automatic adding mode 506 for adding contacts. In recommending mode 502, a candidate contact is recommended or suggested as a contact in the user's profile in step 416 of FIG. 4. In this mode, a candidate contact is not automatically queued or added to the user's profile. Rather, an indication which recommends or suggests the candidate contact for addition to the user's profile may be produced in the user interface of the computer device. In response, the user may select and view the profile of the recommended candidate contact. Subsequently, the user may manually add the contact to the user's profile via the user interface, if desired.

In queuing mode 504, a candidate contact is automatically queued in a queue of the user's profile for addition as a contact to the user's profile in step 416 of FIG. 4. In this mode, a candidate contact is not automatically added to the user's profile. Rather, a user input prompt may be produced in the user interface of the computer device for accepting or rejecting the candidate contact in the queue. If an acceptance is received via the user interface, the candidate contact is added to the user's profile; otherwise, if a rejection is received via the user interface, the candidate contact is not added to the user's profile. If neither an acceptance nor a rejection is received via the user interface, the candidate contact is not added to the user's profile.

In automatic adding mode 506, a candidate contact is automatically added to the user's profile. This step may be performed transparently to the user, and/or without user intervention. No user input prompts for accepting or rejecting the candidate contact are utilized. On the other hand, an indication which identifies the added candidate contact may be produced in the user interface of the computer device, after or at the time of the addition of the candidate contact.

Note that, although three (3) operating modes 502, 504, and 506 are shown and described, the technique may make use of only two (2) of the operating modes.

As described earlier above, user preference settings 430 indicate whether contacts should always be recommended, always be queued, or always be automatically added (i.e. in step 416 of FIG. 6). If user preference settings 430 indicate to recommend contacts, then the computer device operates in recommending mode 502. If user preference settings 430 indicate to queue contacts, then the computer device operates in queuing mode 504. If user preference settings 430 indicate to automatically add contacts, then the computer device operates in automatic adding mode 506.

On the other hand, the user may override the above user preferences and select "smart" adding with use of learning mechanism 432. Learning mechanism 434 may set learned settings 432 for operation in one of modes 502, 504, or 506 from learning based on feedback regarding the user's selections over time. Learning mechanism 434 may also set operation to one of modes 502, 504, or 506 based on the detection of predetermined conditions or events. Learning mechanism 434 may change amongst modes 502, 504, or 506 over time, as contacts in the profiles and/or attributes associated therewith may change over time.

In some embodiments, learning mechanism 434 sets operation to one of modes 502, 504, or 506 based on identifying common (or uncommon) attributes of contacts between profiles, and/or user selections for adding or rejecting contacts. As one illustrative example, operation may be set to one of modes 502, 504, or 506 based on the number of (e.g., how many) contacts in the first and the second profiles having a common stored attribute. For example, operation may be set to recommending mode 502 if the number of contacts in the first and the second profiles having the common stored attribute fails to exceed a first threshold value. On the other hand, operation may be set to queuing mode 502 if the number of contacts in the first and the second profiles having the common stored attributes exceeds the first threshold value. Further, operation may be set to automatic adding mode 506 if the number of contacts in the first and the second profiles having the common stored attributes exceed a second threshold value. The second threshold value may be greater than the first threshold value.

In some embodiments, each attribute type is associated with and includes a stored setting which indicates a different one of modes 502, 504, or 506. Thus, the mode of operation may be different for each different attribute type, and a different operation (i.e., recommend, queue, or automatically add) may be performed in step 416 of FIG. 4 for each different attribute type.

As mentioned above, learning mechanism 434 may also learn and control operation based on feedback from the user's selections. For example, consider operation in queuing mode 504 of FIG. 5. In queuing mode 504, a user input prompt may be produced in the user interface for accepting or rejecting the candidate contact in the queue. If an acceptance is received via the user interface, then the candidate contact is added to the user's profile, and the matched attribute utilized as the basis for the queuing may be marked with an indication of relatively high importance or priority. On the other hand, if a rejection is received via the user interface, then the candidate contact is not added to the user's profile, and the matched attribute utilized as the basis for the queuing may be marked with an indication of relatively low importance or priority. In some embodiments, if the matched attribute receives a number of acceptance indications that meet or exceed a predetermined threshold value, then operation may proceed to automatic adding mode 506 (e.g., for the particular matched attribute or attribute type). On the other hand, if he matched attribute receives a number of rejection indications that meet or exceed a predetermined threshold value, then operation may proceed to recommending mode 502 (e.g., for the particular matched attribute or attribute type) or no recommending mode at all (e.g., for the particular matched attribute or attribute type)

Thus, methods and apparatus for use in adding contacts between profiles of different social networks have been described. In one illustrative example, a technique for use in adding contacts in a first profile of a first social network to a second profile of a second social network is described. For each candidate contact in the first profile, the technique involves identifying, for a selected attribute type, whether a match exists between a stored attribute of the candidate contact in the first profile and a stored attribute of a contact in the second profile. If the match exists, then the candidate contact in the first profile is recommended, queued, or added as a contact in the second profile. Otherwise, if no match exists, then the candidate contact in the first profile is excluded from being recommended, queued, or added as a contact in the second profile. The attribute types may be or including any suitable attribute types. The attribute types may include a relationship type between the contact and the user, where the relationship type is one of family, friends, coworker, classmate, etc. The attribute types may include an activity or interest type. Further, the attribute types may include a group name of a group associated with a profile. Also, the attribute types may include a last name, a domain name of an electronic mail (e-mail) address, a city of a residential address, a city of a home town, a school name, or an employer name.

In some embodiments, a learning mechanism may be utilized to set an operating mode of the technique to a recommending mode, a queuing mode, or an adding mode for adding contacts. The operating mode may be set based on predetermined conditions or events, such as when a number of contacts in the first and the second profiles having a common stored attribute exceeds a threshold value. In one illustrative example, the operating mode is set to a recommending mode of operation. Here, if a match exists, the candidate contact in the first profile is recommended as a contact for addition to the second profile. If a number of contacts in the first and the second profiles having a common stored attribute exceeds a first threshold value, then the operating mode is set to a queuing mode of operation. Here, if a match exists, the candidate contact in the first profile is automatically queued as a contact for addition to the second profile. On the other hand, if the number of contacts in the first and the second profiles having the common stored attribute exceeds a second threshold value, then the operating mode is set to an automatic adding mode of operation. Here, if a match exists, the candidate contact in the first profile is automatically added as a contact in the second profile.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Although illustrated example embodiments have been described herein with reference to the accompanying drawings, it is to be understood that embodiments are not limited to those precise example embodiments, and that various other changes and modifications may be affected therein by one skilled in the art without departing from the scope or spirit of the disclosure.

## Claims

1. A method in a computer device which is configured to add one or more contacts in a first profile of a first social network to a second profile of a second social network, each one of the first and the second profiles including a plurality of stored attributes, the method comprising:
for each one of a plurality of candidate contacts in the first profile:
identifying, for a selected attribute type, whether a match exists between a stored attribute of the candidate contact in the first profile and a stored attribute of a contact in the second profile;
if the match exists, then causing the candidate contact in the first profile to be one of recommended, queued, and added as a contact in the second profile; and
otherwise, if no match exists, then excluding the candidate contact in the first profile from being one of recommended, queued, and added as a contact in the second profile.

2. The method of claim 1, further comprising:
repeating each step of the method for one or more additional selected attribute types.

3. The method of claim 1, further comprising:
operating in one of a recommending mode, a queuing mode, and an automatic adding mode based on user preference settings; or
operating in one of a recommending mode, a queuing mode, and an automatic adding mode based on learned settings which are set in accordance with a learning mechanism of the computer device.

4. The method of claim 1, further comprising:
operating in a queuing mode of operation, where a candidate contact is placed in a queue;
receiving one of an acceptance and a rejection of the candidate contact in the queue; and
in response to receiving the acceptance, operating in an automatic adding mode of operation.

5. The method of claim 1, further comprising:
identifying a predetermined condition; and
executing the steps of the method based on identifying the predetermined condition;
wherein the predetermined condition comprises a number of contacts in the first and the second profiles which have a common stored attribute exceeds a threshold value.

6. The method of claim 1, further comprising:
operating in one of a queuing mode and an automatic adding mode based on a number of common stored attributes of contacts in the first and the second profiles.

7. The method of claim 1, further comprising:
identifying whether a number of contacts in the first and the second profiles having a common stored attribute exceeds a first threshold value and, if so, then:
for each one of a subsequent plurality of candidate contacts in the first profile:
identifying whether a match exists between a stored attribute of the candidate contact in the first profile and the common stored attribute; and
if the match exists, then queuing the candidate contact for addition to the second profile.

8. The method of claim 1, further comprising:
identifying whether the number of contacts in the first and the second profiles having the common stored attribute exceeds a second threshold value and, if so, then:
for each one of a subsequent plurality of candidate contacts in the first profile:
identifying whether a match exists between a stored attribute of the candidate contact in the first profile and the common stored attribute; and
if the match exists, then adding the candidate contact to the second profile.

9. The method of claim 1, further comprising:
operating in a recommending mode of operation such that, if the match exists, the candidate contact in the first profile is recommended as a contact for addition to the second profile;
identifying whether a number of contacts in the first and the second profiles having a common stored attribute exceeds a first threshold value and, if so, then:
operating in a queuing mode of operation such that, if the match exists, the candidate contact in the first profile is queued as a contact for addition to the second profile.

10. The method of claim 9, further comprising:
identifying whether the number of contacts in the first and the second profiles having the common stored attribute exceeds a second threshold value and, if so, then:
operating in an adding mode of operation such that, if the match exists, the candidate contact in the first profile is added as a contact in the second profile.

11. The method of claim 1, further comprising:
producing an aggregate contact list for use in the method, the aggregate contact list including the contacts in the first and the second profiles and a plurality of stored attributes for each said contact.

12. The method of claim 1, wherein the selected attribute types include at least one of:
a last name;
a domain name of an electronic mail (e-mail) address;
a city of a residential address;
a city of a home town;
a school name; and
an employer name.

13. The method of claim 1, wherein the selected attribute type includes at least one of:
a relationship type between the candidate contact in the first profile and the user, the relationship type being one of family, friends, coworker and classmate;
an activity or interest type; and
a group name of a group associated with a profile in the first social network.

14. The method of claim 1, wherein the method is triggered by a predetermined event comprising one of:
identifying that the new contact has been added to the second profile;
identifying that a stored attribute of an existing contact in the second profile has been updated;
identifying that the second social network has been joined by the user; and
detecting an expiration of a timer after a new contact has been added to the second profile.

15. A computer device, comprising:
one or more processors;
an interface coupled to the one or more processors; and
the one or more processors being configured to add one or more contacts in a first profile of a first social network to a second profile of a second social network according to the method of any one of claims 1-14.
